(19) Europäisches Patentamt / European Patent Office / Office européen des brevets

(11) **EP 4 189 643 B1**

(12) **EUROPEAN PATENT SPECIFICATION**

(45) Date of publication and mention
of the grant of the patent:
**18.02.2026 Bulletin 2026/08**

(21) Application number: **21749822.9**

(22) Date of filing: **27.07.2021**

(51) International Patent Classification (IPC):
**G06T 7/136** (2017.01)       **G06T 5/92** (2024.01)

(52) Cooperative Patent Classification (CPC):
**G06T 7/136; G06T 5/92;** G06T 2207/10064;
G06T 2207/30096

(86) International application number:
**PCT/EP2021/070986**

(87) International publication number:
**WO 2022/023332 (03.02.2022 Gazette 2022/05)**

(54) **PROCESSING OF MULTIPLE LUMINESCENCE IMAGES GLOBALLY FOR THEIR MAPPING AND/OR SEGMENTATION**

GLOBALE VERARBEITUNG VON MEHREREN BILDERN ZU DEREN ABBILDUNG UND/ODER SEGMENTIERUNG

TRAITEMENT D'IMAGES MULTIPLES À L'ÉCHELLE MONDIALE POUR LEUR MAPPAGE ET/OU SEGMENTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2020 EP 20188313**

(43) Date of publication of application:
**07.06.2023 Bulletin 2023/23**

(73) Proprietor: **SurgVision GmbH**
**81379 Munich (DE)**

(72) Inventors:
• **TARUTTIS, Adrian**
**81379 Munich (DE)**
• **KOCH, Maximilian**
**81379 Munich (DE)**

(74) Representative: **Pezzoli, Ennio et al**
**c/o Maccalli & Pezzoli S.r.l.**
**Via Settembrini 40**
**20124 Milano (IT)**

(56) References cited:
**US-A1- 2012 170 842     US-A1- 2014 112 595**

• JONATHAN T. ELLIOTT ET AL: "Review of fluorescence guided surgery visualization and overlay techniques", BIOMEDICAL OPTICS EXPRESS, vol. 6, no. 10, 3 September 2015 (2015-09-03), United States, pages 3765, XP055405185, ISSN: 2156-7085, DOI: 10.1364/BOE.6.003765
• DSOUZA ALISHA V ET AL: "Logarithmic intensity compression in fluorescence guided surgery applications", JOURNAL OF BIOMEDICAL OPTICS, SPIE, 1000 20TH ST. BELLINGHAM WA 98225-6705 USA, vol. 20, no. 8, 1 August 2015 (2015-08-01), pages 80504, XP060071857, ISSN: 1083-3668, [retrieved on 20150825], DOI: 10.1117/1.JBO.20.8.080504
• F. DRAGO ET AL: "Adaptive Logarithmic Mapping For Displaying High Contrast Scenes", COMPUTER GRAPHICS FORUM, vol. 22, no. 3, 1 September 2003 (2003-09-01), pages 419 - 426, XP055099276, ISSN: 0167-7055, DOI: 10.1111/1467-8659.00689

**Description**

Technical field

The present disclosure relates to imaging applications. More specifically, this disclosure relates to processing of luminescence images in medical applications.

Background art

The background of the present disclosure is hereinafter introduced with the discussion of techniques relating to its context. However, even when this discussion refers to documents, acts, artifacts and the like, it does not suggest or represent that the discussed techniques are part of the prior art or are common general knowledge in the field relevant to the present disclosure.

Images (in digital form) are commonly used to provide visual representations of scenes comprising one or more material objects. Particularly, imaging techniques are exploited in equipment for medical applications to inspect body-parts of patients (typically, in a substantially non-invasive manner even if they are not visible directly).

A specific imaging technique increasingly considered is luminescence imaging, and especially fluorescence imaging. Luminescence imaging is based on a luminescence phenomenon, consisting of the emission of light by luminescence substances when subject to any excitation different from heating; particularly, a fluorescence phenomenon occurs in fluorescence substances (called fluorophores), which emit (fluorescence) light when they are illuminated. Images of a body-part defined by the fluorescence light that is emitted from different locations of the body-part (fluorescence images) then represent the fluorophores that are present therein. For example, fluorescence agents (possibly adapted to reaching specific molecules of desired targets, such as lesions like tumors, and then to remaining immobilized thereon in Fluorescence Molecular Imaging (FMI) applications) may be administered to the patients. The representation of the (immobilized) fluorescence agents in the fluorescence images then facilitates the identification (and quantification) of the corresponding targets. For this purpose, the fluorescence images are generally compressed to map the higher dynamic range of a camera used to acquire them to a lower dynamic range of a display used to show them, as described in "Review of fluorescence guided surgery visualization and overlay techniques, J.T. Elliott et al., OSA 1 Oct 2015 | Vol. 6, No. 10 | DOI:10.1364/BOE.6.003765 | BIOMEDICAL OPTICS EXPRESS 3765" and in "Logarithmic intensity compression in fluorescence guided surgery applications, A. V. Dsouza et al., Journal of Biomedical Optics 080504-1 August 2015 • Vol. 20(8)".

This information may be used in several medical applications, for example, in surgical applications for recognizing margins of lesions to be resected, in diagnostic applications for discovering/monitoring lesions and in therapeutic applications for delineating lesions to be treated.

However, the correct recognition of the lesions remains quite challenging, since it is adversely affected by several hindering factors.

Particularly, different fluorescence images that are acquired of a same body-part during a medical procedure relating thereto may have different dynamic ranges. This makes the identification of the fluorescence agents quite difficult, both in absolute terms (for their quantification) and in relative terms (among the different fluorescence images).

Therefore, the fluorescence images are generally segmented (into segments defined by portions thereof with substantially homogenous characteristics) to discriminate the fluorescence agents (and then the corresponding targets) from a rest of the body-part. For this purpose, values of each fluorescence image (representing corresponding locations of the body-part) are compared with a segmentation threshold, which is calculated according to a statistical distribution of the values of the fluorescence image. However, disturbing light (for example, due to surgical instruments, hands, surgical tools, surrounding body-parts and background materials) may bias the statistical distribution of the values of the fluorescence image, and then its segmentation threshold (either increasing or reducing it).

This involves the risk of misclassifying the locations of the body-part. For example, in surgical applications this leads to uncertainty about the precise recognition of the margins of the lesions (with the risk of incomplete resection of the lesions or excessive removal of healthy tissues). In diagnostic applications, this adversely affects the identification and/or the quantification of the lesions, which may lead to misinterpretations (with the risk of false positives/negatives and wrong follow-up). In therapeutic applications, this adversely affects the delineation of the lesions to be treated (with the risk of reduced effectiveness of a therapy or of damages to healthy tissues). All of the above may be detrimental to a health of the patients.

Summary

A simplified summary of the present disclosure is herein presented in order to provide a basic understanding thereof; however, the sole purpose of this summary is to introduce some concepts of the disclosure in a simplified form as a prelude to its following more detailed description, and it is not to be interpreted as an identification of its key elements nor as a delineation of its scope.

In general terms, the present disclosure is based on the idea of processing the fluorescence images at a global level.

Particularly, an aspect provides a method for imaging one or more body-parts of a patient in a medical application. A mapping function is determined that maps a global range of the values of a plurality of luminescence images of the body-parts to a dynamic range of a displayer. The luminescence images are mapped by converting their values according to the mapping function. The resulting mapped luminescence images are then displayed together on the displayer.

In addition or in alternative, at least one segmentation threshold for separating the values of all the luminescence images into a separation number of groups is determined according to the values of all the luminescence images. The luminescence images are segmented each according to a comparison of the values of the luminescence image with the segmentation threshold.

A further aspect provides a computer program for implementing the method.

A further aspect provides a corresponding computer program product.

A further aspect provides a computing device for implementing the method.

A further aspect provides an imaging system comprising the computing device.

More specifically, one or more aspects of the present disclosure are set out in the independent claims and advantageous features thereof are set out in the dependent claims, with the wording of all the claims that is herein incorporated *verbatim* by reference (with any advantageous feature provided with reference to any specific aspect that applies *mutatis mutandis* to every other aspect).

Brief description of the drawings

The solution of the present disclosure, as well as further features and the advantages thereof, will be best understood with reference to the following detailed description thereof, given purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes, such as value, content and representation). Particularly:

FIG.1 shows a schematic block diagram of an imaging system that may be used to practice the solution according to an embodiment of the present disclosure,

FIG.2A-FIG.2D show the general principles of the solution according to an embodiment of the present disclosure,

FIG.3A-FIG.3B show the general principles of the solution according to another embodiment of the present disclosure,

FIG.4 shows the main software components that may be used to implement the solution according to an embodiment of the present disclosure,

FIG.5A-FIG.5B show an activity diagram describing the flow of activities relating to an implementation of the solution according to an embodiment of the present disclosure, and

FIG.6-FIG.9 show different examples of application of the solution according to an embodiment of the present disclosure.

Detailed description

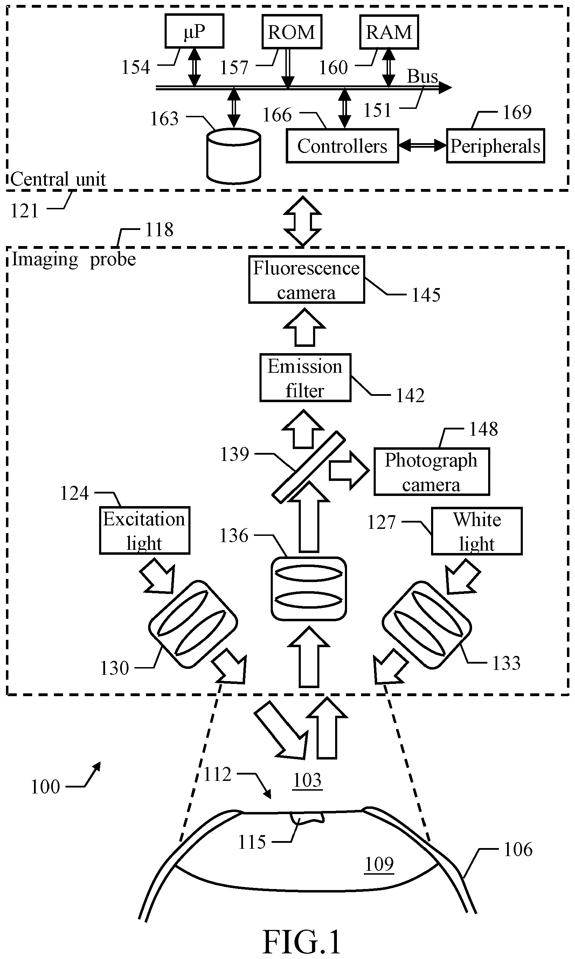

With reference in particular to FIG.1, a schematic block diagram is shown of an imaging system 100 that may be used to practice the solution according to an embodiment of the present disclosure.

The imaging system 100 allows imaging a scene comprised in a field of view 103 thereof (defined by a part of the world within a solid angle to which the imaging system 100 is sensitive). For example, the imaging system 100 is used to apply fluorescence imaging techniques for assisting a surgeon in Fluorescence Guided Surgery (FGS), and particularly Fluorescence Guided Resection (FGR) when relating to tumors. In this specific case, the scene relates to a patient 106 undergoing a surgical procedure, to whom a fluorescence agent has been previously administered (for example, adapted to accumulating in tumors). The scene comprises a body-part 109 of the patient 106, wherein a surgical cavity 112 (for example, a small skin incision in minimally invasive surgery) has been opened to expose a tumor 115 to be resected. The scene may also comprise one or more foreign objects different from the surgical cavity 112 (not shown in the figure), for example, surgical instruments, hands, surgical tools, surrounding body-parts, background materials and so on.

The imaging system 100 has an imaging probe 118 for acquiring images of the field of view 103 and a central unit 121 for controlling its operation.

Starting from the imaging probe 118, it comprises the following components. An excitation light source 124 and a white light source 127 generate an excitation light and a white light, respectively. The excitation light has wavelength and energy suitable to excite the fluorophores of the fluorescence agent (such as of Near Infra-Red (NIR) type), whereas the white light appears substantially colorless to the human eye (such as containing all the wavelengths of the spectrum that is visible to the human eye at equal intensity). Delivery optics 130 and delivery optics 133 deliver the excitation light and the white light, respectively, to the (same) field of view 103. Collection optics 136 collect light from the field of view 103 (in an epi-illumination geometry). The collected light comprises fluorescence light that is emitted by any fluorophores present in the field of view 103 (illuminated by the excitation light). Indeed, the fluorophores pass to an excited (electronic) state when they absorb the excitation light; the excited state is unstable, so that the fluorophores very shortly decay therefrom to a ground (electronic) state, thereby emitting the fluorescence light (at a characteristic wavelength, longer than the one of the excitation light because of energy dissipated as heat in the excited state) with an intensity mainly depending on the amount of the fluorophores that are illuminated. Moreover, the collected light comprises visible light (in the visible spectrum) that is reflected by any objects present in the field of view 103 (illuminated by the white light). A beam-splitter 139 splits the collected light into two channels. For example, the beam-splitter 139 is a dichroic mirror transmitting and reflecting the collected light at wavelengths above and below, respectively, a threshold wavelength between a spectrum of the visible light and a spectrum of the fluorescence light (or *vice-versa*). In the (transmitted) channel of the beam-splitter 139 with the fluorescence light defined by the portion of the collected light in its spectrum, an emission filter 142 filters the fluorescence light to remove any excitation light (which might be reflected by the field of view 103) and any ambient light (which might be generated by intrinsic fluorescence). A fluorescence camera 145 (for example, of EMCCD type) receives the fluorescence light from the emission filter 142 and generates a corresponding fluorescence (digital) image representing the distribution of the fluorophores in the field of view 103. In the other (reflected) channel of the beam-splitter 139 with the visible light defined by the portion of the collected light in its spectrum, a reflectance (or photograph) camera 148 (for example, of CCD type) receives the visible light and generates a corresponding reflectance (digital) image representing what is visible to the human eye in the field of view 103.

Moving to the central unit 121, it comprises several units that are connected among them through a bus structure 151. Particularly, one or more microprocessors ($\mu$P) 154 provide a logic capability of the central unit 121. A non-volatile memory (ROM) 157 stores basic code for a bootstrap of the central unit 121 and a volatile memory (RAM) 160 is used as a working memory by the microprocessors 154. The central unit 121 is provided with a mass-memory 163 for storing programs and data (for example, a Solid-State-Disk (SSD)). Moreover, the central unit 121 comprises a number of controllers 166 for peripherals, or Input/Output (I/O) units. Particularly, the controllers 166 control the excitation light source 124, the white light source 127, the fluorescence camera 145 and the reflectance camera 148 of the imaging probe 118; moreover, the controllers 166 control further peripherals, denoted as a whole with the reference 169, such as one or more monitors for displaying the fluorescence/reflectance images, a keyboard for entering information/commands, a trackball for moving a pointer on the monitor(s), a drive for reading/writing removable storage units (such as USB keys) and a network interface card (NIC) for connecting to a (communication) network (such as a Local Area Network (LAN)).

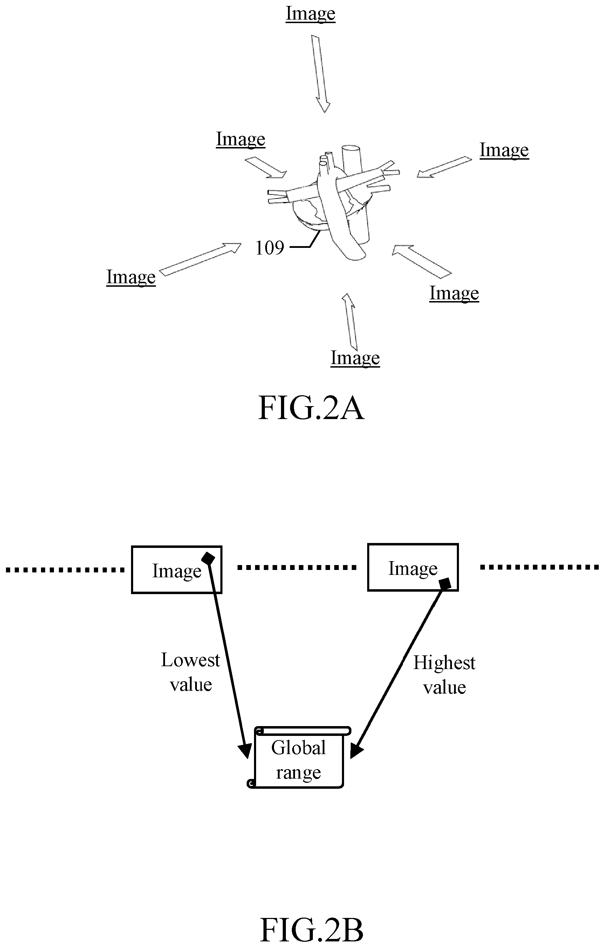

With reference now to FIG.2A-FIG.2D, the general principles are shown of the solution according to an embodiment of the present disclosure.

Starting from FIG.2A, a plurality of fluorescence images are provided of one or more body-parts of the patient (each one comprising a plurality of values representing corresponding locations of a body-part). For example, the fluorescence images relate to a same body-part being imaged from different (imaging) directions, to different regions of a same body-part or to different body-parts. In the specific application at issue, the fluorescence images relate to the body-part 109 undergoing the surgical procedure, acquired from six directions in the example shown in the figure.

Moving to FIG.2B, a global range is determined of the values of all the fluorescence images; the global range spans from the lowest value to the highest value of all the fluorescence images (possibly filtered to remove outliers thereof).

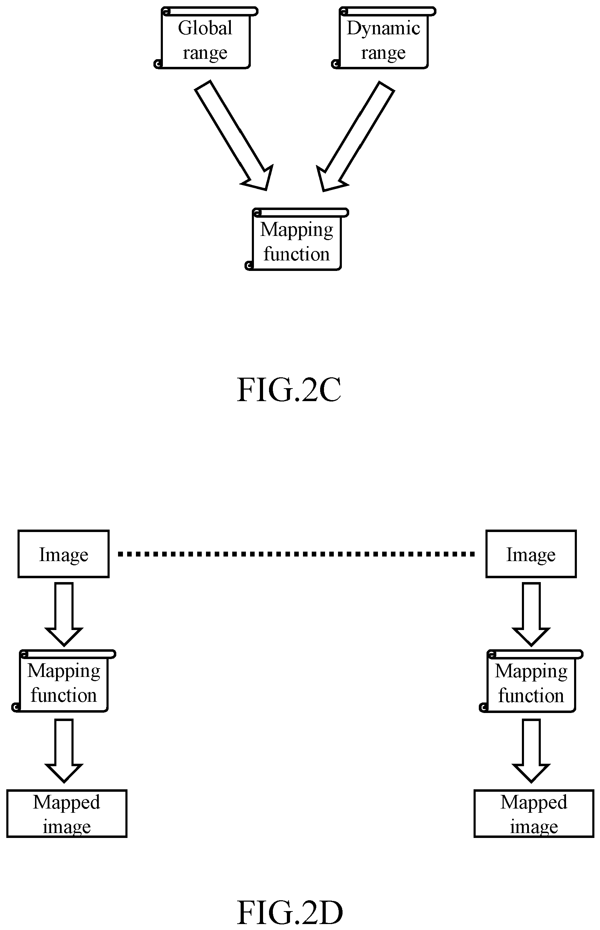

Moving to FIG.2C, a mapping function is determined. The mapping function maps the global range to a dynamic range for displaying the fluorescence images (for example, linearly); the dynamic range (being common for all the fluorescence images) relates to a displayer used for this purpose (a monitor of the imaging system, not shown in the figure, in the application at issue).

Moving to FIG.2D, each fluorescence image is mapped to the dynamic range; for this purpose, each value of the fluorescence image is converted according to the mapping function. The (mapped) fluorescence images so obtained are then displayed together (on the monitor of the imaging system, not shown in the figure, in the application at issue).

The above-described solution equalizes the representation of the body-part(s) in the different fluorescence images.

In fact, the mapped fluorescence images are now normalized to the same dynamic range. This facilitates a quantitative assessment of the mapped fluorescence images (in absolute terms); moreover, this facilitates a comparison among the mapped fluorescence images (in relative terms).

Particularly, in the example at issue the identification of the (immobilized) fluorescence agent, and then of the corresponding target, is significantly improved.

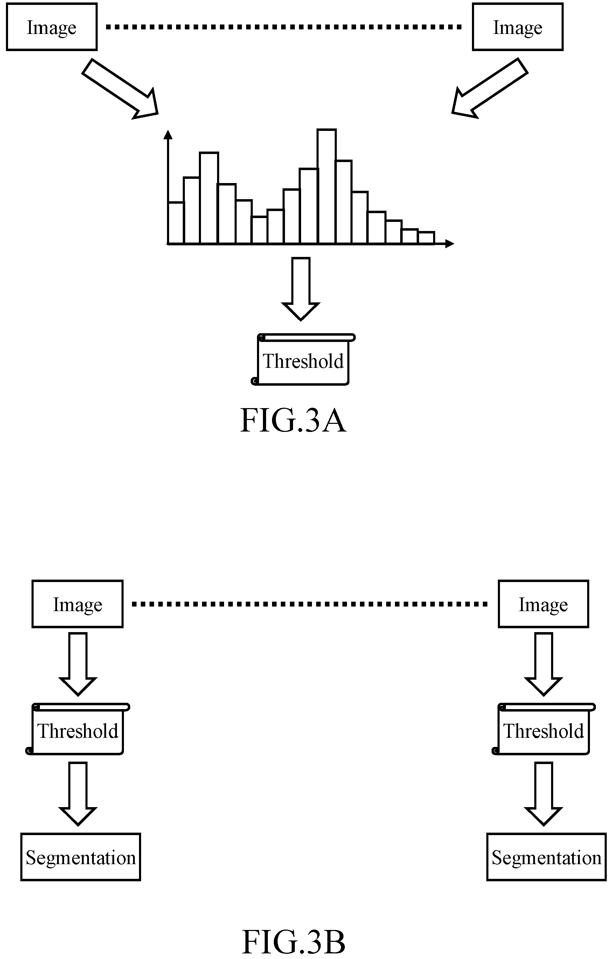

With reference now to FIG.3A-FIG.3B, the general principles are shown of the solution according to another embodiment of the present disclosure.

Starting from FIG.3A, a segmentation threshold (or more) is provided; the segmentation threshold is common for all the fluorescence images (either in their original form or after their mapping to the dynamic range). For example, in an implementation the segmentation threshold is determined globally according to all the fluorescence images; particularly, the segmentation threshold is determined according to a statistical distribution of the values of all the fluorescence images for separating the values of all the fluorescence images in a (separation) number of different groups (with substantially homogenous characteristics). In the specific application at issue, the segmentation threshold separates the values of all the fluorescence images in two groups corresponding to the detection and to the non-detection, respectively, of the fluorescence agent.

Moving to FIG.3B, each fluorescence image is segmented into a same (separation) number of different segments that represent corresponding regions of the body-part (with substantially homogenous characteristics); the segments are determined according to a comparison of the values of the fluorescence image with the (same) segmentation threshold. In the specific application at issue, each fluorescence image is segmented into a (detection) segment wherein the fluorescence agent is detected and a (non-detection) segment wherein the fluorescence agent is not detected (and then representing the tumor and the healthy tissue, respectively).

The above-described solution significantly increases an accuracy of the segmentation of the (possibly mapped) fluorescence images.

In fact, since now the values of all the fluorescence images are taken into account, an effect of possible anomalies in some of them is diluted. Therefore, the statistical distribution of the values of all the fluorescence images is less biased by the anomalies; this reflects in a lower biasing of the segmentation threshold.

Particularly, in the example at issue any disturbing light (such as due to the foreign objects) adversely affects the segmentation threshold to a lower extent. As a result, the risk of misclassifying the locations of the body-part is substantially reduced.

The above-mentioned mapping and/or segmentation of the fluorescence images facilitate the recognition of the margins of lesions to be resected in surgical applications, the identification/quantification of lesions in diagnostic applications and the delineation of lesions to be treated in therapeutic applications. All of the above has a beneficial effect on the health of the patient.

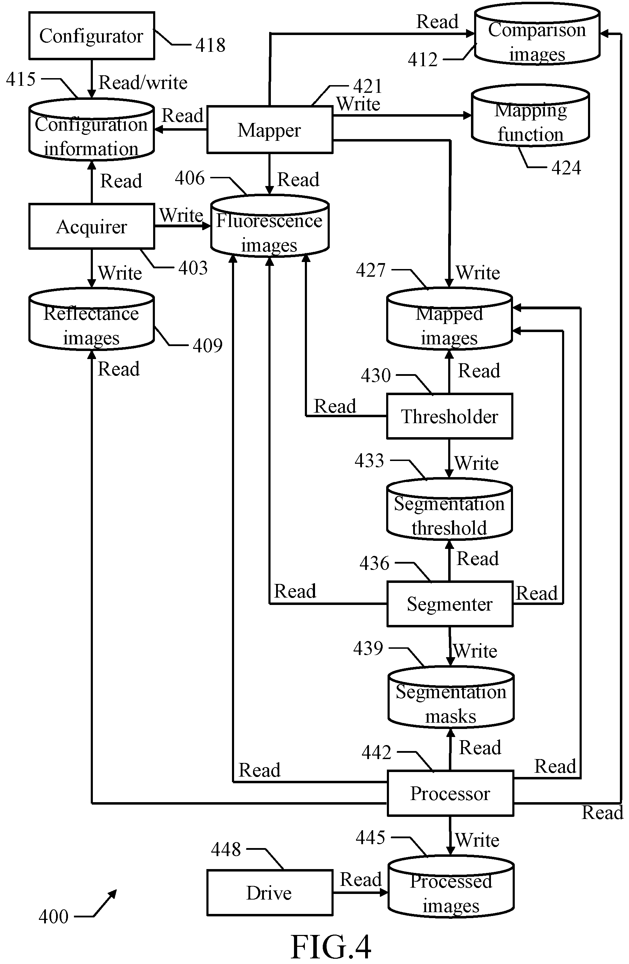

With reference now to FIG.4, the main software components are shown that may be used to implement the solution according to an embodiment of the present disclosure.

All the software components (programs and data) are denoted as a whole with the reference 400. The software components 400 are typically stored in the mass memory and loaded (at least in part) into the working memory of the central unit of the imaging system when the programs are running, together with an operating system and other application programs not directly relevant to the solution of the present disclosure (thus omitted in the figure for the sake of simplicity). The programs are initially installed into the mass memory, for example, from removable storage units or from the network. In this respect, each program may be a module, segment or portion of code, which comprises one or more executable instructions for implementing the specified logical function.

Particularly, an acquirer 403 drives the components of the imaging system dedicated to acquiring the fluorescence/reflectance images of the field of view suitably illuminated for this purpose (during a surgical procedure in the example at issue). The acquirer 403 writes a fluorescence images repository 406 and a reflectance images repository 409, which contain corresponding sets of fluorescence images and reflectance images, respectively, being acquired during an imaging process that is in progress. The fluorescence images repository 406 and the reflectance images repository 409 comprise corresponding entries for each pair of fluorescence image and reflectance image (being acquired at the same time and in the same way). The entry of the fluorescence/reflectance images repository 406,409 stores a bitmap of the fluorescence/reflectance image, which is defined by a matrix of cells (for example, with 512 rows and 512 columns) each containing a value of a pixel, *i.e.*, a basic picture element representing a corresponding location of the field of view; each (fluorescence) value of the fluorescence image defines the brightness of the pixel as a function of an intensity of the fluorescence light that is emitted by the location, whereas each (reflectance) value of the reflectance image defines the brightness of the pixel as a function of an intensity of the visible light that is reflected by the location (for example, from black to white in a grey-scale representation). The entry may further store a descriptive label of the fluorescence/reflectance image; for example, the descriptive label indicates an imaging arrangement under which the fluorescence/reflectance image has been acquired (such as its imaging direction, region and/or body-part).

Optionally, a comparison images repository 412 contains one or more comparison (fluorescence) images of corresponding comparison entities. For example, the comparison images comprise a reference (fluorescence) image, or more, that represents a reference device having one or more sites containing known concentrations of the fluorescence agent (for example, containers filled with a liquid containing the fluorescence agent in different concentrations). In addition or in alternative, the comparison images comprise one or more evaluation (fluorescence) images of the same type of body-parts of different patients (such as in a healthy condition and with a same lesion). The comparison images repository 412 has an entry for each comparison image. The entry stores a bitmap of the comparison image, which is defined by a matrix of cells (with the same or different size with respect to the fluorescence images), each containing a (comparison) value of a corresponding pixel. The entry may further store a descriptive label of the comparison image; for example, the descriptive label indicates the concentrations of the fluorescence agent in a reference image, the type and/or the condition of the body-part in an evaluation image.

A configuration information repository 415 stores configuration information for the imaging process. The configuration information comprises an indication of the different imaging arrangements under which the fluorescence/reflectance images may be acquired; for example, the imaging arrangements are imaging directions of a same body-part, such as all the anatomical directions *(i.e.,* anterior, posterior, superior, inferior, medial, lateral), different regions of a same body-part, such as healthy tissue and pathological tissue, different body-parts, such as corresponding organs, and so on. The configuration information comprises an indication of the dynamic range (for mapping the fluorescence images). The configuration information comprises an indication of a parametric function for determining the mapping function, which parametric function depends on parameters defined by the global range and the dynamic range; for example, the parametric function is of linear type:

$$y = m \cdot x + Ld - m \cdot Lg$$

$$m = (Hd - Ld)/(Hg - Lg),$$

wherein *Lg* and *Hg* are a lower limit and a higher limit, respectively of the global range and *Ld* and *Hd* are a lower limit and a higher limit, respectively of the dynamic range. The acquirer 403 reads the configuration information repository 415 (and particularly the imaging arrangements). A configurator 418 exposes a user interface for updating the configuration information. For example, the user interface comprises checkboxes for selecting the imaging arrangements (among all the available ones) and a slider for changing the lower limit and the higher limit of the dynamic range. The configurator 418 reads/-writes the configuration information repository 415 (and particularly the imaging arrangements and the dynamic range).

A mapper 421 determines the global range (of the values of all the fluorescence images and possibly one or more comparison images) and then the mapping function (for mapping the fluorescence/comparison images) accordingly. The mapper 421 reads the fluorescence images repository 406, the comparison images repository 412 and the configuration information repository 415 (and particularly the dynamic range and the parametric function). Moreover, the mapper 421 writes a mapping function repository 424. The mapping function repository 424 stores an indication of the mapping function (consisting of an instance of the parametric function defined by the actual global range and dynamic range). The mapper 421 further maps the fluorescence/comparison images according to the mapping function. The mapper 421 writes a mapped images repository 427. The mapped images repository 427 stores a set of mapped (fluorescence) images corresponding to the fluorescence images and possibly a set of mapped (comparison) images corresponding to the comparison images. Each mapped fluorescence/comparison image is formed by a bitmap, which is defined by a matrix of cells with the same size as the fluorescence images (for the mapped fluorescence images) or the comparison images (for the mapped comparison images), each containing a (mapped) value of the corresponding pixel.

A thresholder 430 determines the segmentation threshold for segmenting the (possibly mapped) fluorescence images. The thresholder 430 reads the fluorescence images repository 406 and/or the mapped images repository 427 (and particularly the mapped fluorescence images). Moreover, the thresholder 430 writes a segmentation threshold repository 433. The segmentation threshold repository 433 stores the segmentation threshold. A segmenter 436 segments the fluorescence images, either as originally provided or after their mapping (according to the segmentation threshold). The segmenter 436 reads the fluorescence images repository 406 and/or the mapped images repository 427 (and particularly the mapped fluorescence images), and it reads the segmentation threshold repository 433. The segmenter 436 may also expose a user interface for changing the segmentation threshold manually (for example, by means of a slider). Moreover, the segmenter 436 writes a segmentation masks repository 439. The segmentation masks repository 439 stores a set of segmentation masks corresponding to the fluorescence images. Each segmentation mask is formed by a matrix of cells with the same size as the fluorescence images, each containing a segmentation label indicating a classification of the corresponding location; in this case with only one segmentation threshold and then only two (detection/non-detection) segments, the segmentation label is a (binary) segmentation flag, for example, which is asserted (such as at the logic value 1) when the location belongs to the detection segment and it is deasserted (such as at the logic value 0) when the location belongs to the non-detection segment.

A processor 442 generates a set of processed (fluorescence) images corresponding to the fluorescence images and possibly a set of processed (comparison) images corresponding to the comparison images. The processed fluorescence images may be the mapped fluorescence images, segmented (fluorescence) images obtained by resetting (to black) the values of the corresponding non-detection segments of the (possibly mapped) fluorescence images or overlaid images obtained by overlaying the segmented images onto the corresponding reflectance images; the processed comparison images may be the mapped comparison images or the (original) comparison images. The processor 442 reads one or more of the fluorescence images repository 406, the reflectance images repository 409, the comparison images repository 412, the mapped images repository 427 and the segmentation masks repository 439. Moreover, the processor 442 writes a processed images repository 445. The processed images repository 445 comprises an entry for each processed (fluorescence/-comparison) image. The entry stores a bitmap of the processed fluorescence/comparison image, which is defined by a matrix of cells with the same size as the fluorescence images (for the processed fluorescence images) or the comparison images (for the processed comparison images), each containing a (processed) value of the corresponding pixel. The entry further stores the descriptive label of the corresponding fluorescence/-comparison image. Moreover, in case of a processed fluorescence image, the entry also stores a ranking index (indicative of a capability of the processed fluorescence image to detect the fluorescence agent) being calculated by the processor 442. A displayer drive 448 drives the displayer (i.e., the monitor of the imaging system) for displaying the processed (fluorescence/comparison) images together on the displayer, possibly with the corresponding descriptive labels and/or ranking indexes. The displayer drive 448 reads the processed images repository 445.

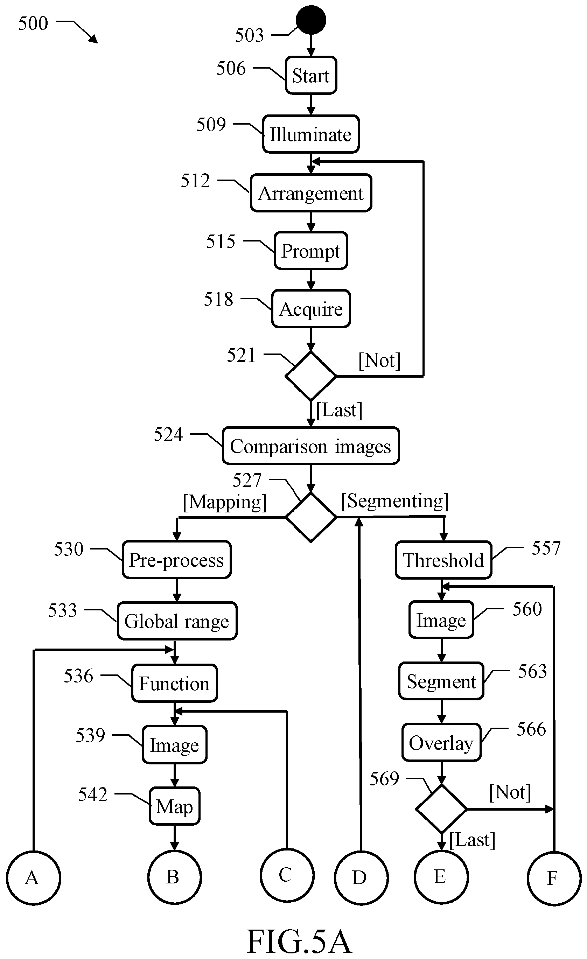

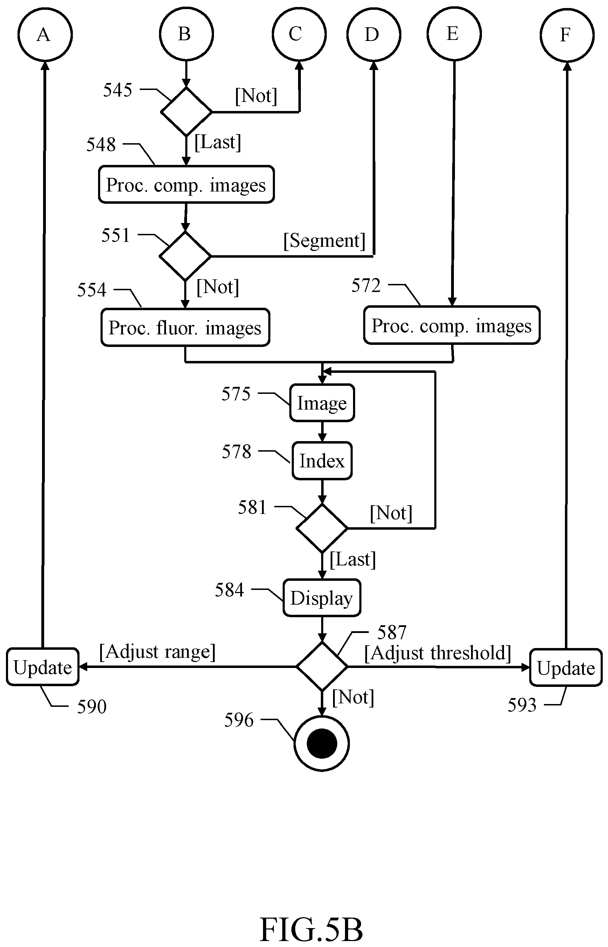

With reference now to FIG.5A-FIG.5B, an activity diagram is shown describing the flow of activities relating to an implementation of the solution according to an embodiment of the present disclosure.

Particularly, the activity diagram represents an exemplary process that may be used for imaging one or more body-parts of a patient in a medical application (during a surgical procedure in the example at issue) with a method 500. In this respect, each block may correspond to one or more executable instructions for implementing the specified logical function on the imaging system.

Before the surgical procedure, a healthcare operator (for example, a nurse) administers a fluorescence agent to the patient. The fluorescence agent (for example, Indocyanine Green, Methylene Blue and so on) is adapted to reaching a specific (biological) target, such as a tumor to be resected, and to remaining substantially immobilized therein. This result may be achieved by using either a non-targeted fluorescence agent (adapted to accumulating in the target without any specific interaction therewith, such as by passive accumulation) or a targeted fluorescence agent (adapted to attaching to the target by means of a specific interaction therewith, such as achieved by incorporating a target-specific ligand into the formulation of the fluorescence agent, for example, based on chemical binding properties and/or physical structures capable of interacting with different tissues, vascular properties, metabolic characteristics and so on). For instance, the fluorescence agent is administered to the patient intravenously as a bolus (with a syringe). As a consequence, the fluorescence agent circulates within the vascular system of the patient until reaching the tumor and binding thereto; the remaining (unbound) fluorescence agent is instead cleared from the blood pool. After a waiting time allowing the fluorescence agent to accumulate in the tumor and to wash-out from the rest of the patient (for example, from some minutes to 24-72 hours), the surgical procedure may start. Therefore, the (healthcare) operator switches on the imaging system.

In response thereto, the process begins by passing from the black start circle 503 to block 506. As soon as the operator enters a start command into the imaging system (for example, with its keyboard), the acquirer at block 509 turns on the excitation light source and the white light source for illuminating the field of view.

A loop is then performed for acquiring the fluorescence/reflectance images from the different (selected) imaging arrangements. The loop begins at block 512, wherein the acquirer retrieves the indication of a (current) imaging arrangement from the configuration information repository (starting from the first one in the corresponding order). The acquirer at block 515 displays a message on the monitor, prompting the operator to place the imaging probe close to an area wherein a surgical cavity has been opened by a surgeon according to the imaging arrangement (for example, reciprocally arranged according to the corresponding imaging direction, for imaging the corresponding region of the body-part or for imaging the corresponding body-part). Once the required imaging arrangement has been established, the operator at block 518 enters a confirmation command into the imaging system (for example, with its keyboard); in response thereto, the acquirer concurrently acquires a (new) pair of fluorescence image and reflectance image, and it adds them to the corresponding repositories; in this way, the fluorescence image and the reflectance image are acquired substantially at the same time and they provide different representations (in terms of fluorescence light and visible light, respectively) of the same field of view that are spatially coherent (i.e., a predictable correlation exists among their pixels, down to a perfect identity). The acquirer at block 521 verifies whether a last imaging arrangement has been taken into account. If not, the process returns to the block 512 to repeat the same operations for a next imaging arrangement. Conversely (once all the imaging arrangements have been taken into account), the loop is exit by descending into block 524. At this point, if desired, one or more comparison images are selected among all the available ones in the corresponding repository; for example, the comparison images are selected manually in response to a prompt, according to a configuration parameter or defined by default (up to all of them).

The flow of activity branches at block 527 according to an operative mode of the imaging system (for example, selected manually at the beginning of the imaging procedure, defined by a configuration parameter or the only one available). Particularly, when the fluorescence images are to be mapped the blocks 539-554 are executed, whereas when the fluorescence images are to be segmented the blocks 557-572 are executed; in both cases, the process again merges at block 575.

Considering now block 530 (mapping), the mapper optionally pre-processes the fluorescence images by performing one or more (linear or non-linear) pre-processing operations (such as based on median-filtering, low-pass filtering, noise suppression algorithms, pixel-vise non-linearity compensation leveraging calibration data and so on); this pre-processing operations may be applied globally (to all the fluorescence images), individually (to each fluorescence image) or locally (to different regions of each fluorescence image). In any case, the mapper at block 533 determines the global range of all the (possibly pre-processed) fluorescence images and the (selected) comparison images, if any (retrieved from the corresponding repositories). For this purpose, the mapper scans the values of all the fluorescence/comparison images (in any arbitrary order) for determining their lowest value and highest value that define the lower limit and the higher limit, respectively, of the global range. This operation may be applied to all the values indiscriminately or by filtering out their outliers. For example, the mapper calculates a low-limit percentile (such as 0.2-2.0, like 1.0) and a high-limit percentile (such as 98.0-99.8, like 99.0) of the values of all the fluorescence/comparison images; the mapper then disregards the values below the low-limit percentile or above the high-limit percentile. The mapper at block 536 determines the mapping function. The mapping function is defined by an instance of the parametric function (retrieved from the configuration information repository) evaluated according to the global range (just determined) and the dynamic range (retrieved from the configuration information repository as well). A loop is then entered at block 539, wherein the mapper takes a (current) fluorescence/comparison image into account (starting from a first one in any arbitrary order). The mapper at block 542 generates the mapped fluorescence/comparison image corresponding to the fluorescence/comparison image, by setting each value of the mapped fluorescence/comparison image equal to the result of the mapping function applied to the corresponding value of the fluorescence/-comparison image; the mapper then saves the mapped fluorescence/comparison image so obtained into the corresponding repository. The mapper at block 545 verifies whether a last fluorescence/comparison image has been taken into account. If not, the process returns to the block 539 to repeat the same operations on a next fluorescence/comparison image. Conversely (once all the fluorescence/comparison images have been taken into account), the loop is exit by descending into block 548. At this point, if necessary, the processor sets the processed comparison images (in the corresponding repository) equal to the mapped comparison images with the addition of the descriptive labels of the corresponding comparison images (from their repositories). The flow of activity further branches at block 551 according to the operative mode of the imaging system. If the mapped fluorescence images are to be segmented as well, the process continues to block 557 (described in the following). Conversely, the processor at block 554 sets the processed fluorescence images (in the corresponding repository) equal to the mapped fluorescence images, with the addition of the descriptive labels of the corresponding fluorescence images (from their repositories). The flow of activity then descends into the block 575.

Considering now block 557 (segmenting), the thresholder determines the segmentation threshold from the values of all the relevant images (retrieved from the corresponding repository), *i.e.*, the fluorescence images when this point is reached from the block 527 directly or the mapped fluorescence images when this point is reached from the block 551 after mapping the fluorescence images, in both cases hereinafter referred to as starting images. For example, the segmentation threshold is calculated by applying the Otsu's algorithm, so as to minimize an intra-class variance of the values of all the starting images between the groups thereof that are separated by the segmentation threshold. A loop is then entered at block 560, wherein the segmenter takes a (current) starting image into account (beginning from a first one in any arbitrary order). The segmenter at block 563 generates the segmentation mask corresponding to the starting image, by asserting or deasserting each segmentation flag of the segmentation mask when the corresponding value of the starting image is (possibly strictly) higher or lower, respectively, than the segmentation threshold (meaning that the corresponding location belongs to the detection segment or to the non-detection segment, respectively); the segmenter then saves the segmentation mask so obtained into the corresponding repository. The processor at block 566 generates the corresponding processed fluorescence image according to the starting image, the segmentation mask and possibly the reflectance image (retrieved from their repositories). For example, when the processed fluorescence image is a segmented image, it is generated by resetting (to black) each value of the starting image when the corresponding segmentation flag of the segmentation mark is deasserted (non-detection segment); alternatively, when the processed fluorescence image is an overlaid image, it is generated by setting each value thereof equal to a color representation of the corresponding value of the starting image (such as in red with brightness increasing with it) when the corresponding segmentation flag of the segmentation mark is asserted (detection segment) or to the corresponding (black-and-white) value of the reflectance image when the corresponding segmentation flag of the segmentation mark is deasserted (non-detection segment). In any case, the processor then saves the processed fluorescence image so obtained, with the addition of the descriptive label of the starting image, into the corresponding repository. The segmenter at block 569 verifies whether a last starting image has been taken into account. If not, the process returns to the block 560 to repeat the same operations for a next starting image. Conversely (once all the starting images have been taken into account), the loop is exit by descending into block 572. At this point, in the presence of comparison images that have not been mapped, the processor sets the processed comparison images (in the corresponding repository) equal to the comparison images with the addition of the corresponding descriptive labels (from their repositories). The flow of activity then descends into the block 575.

With reference now to the block 575, a loop is entered for calculating the ranking indexes of the processed fluorescence images. The loop begins with the processor that takes a (current) processed fluorescence image into account (starting from a first one in any arbitrary order). The processor at block 578 calculates the ranking index of the processed fluorescence image. Particularly, in case of a segmented/overlaid image the ranking index is indicative of a quality of the segmentation of the corresponding (possibly mapped) fluorescence image; for example, the ranking index is set to a mean of the values of the segmented image whose corresponding segmentation flags are asserted in the corresponding segmentation mask (detection segment) divided by a mean of the values of the segmented image whose corresponding segmentation flags are deasserted in the corresponding segmentation mask (non-detection segment). Instead, in case of a mapped fluorescence image the ranking index is indicative of a quality of the mapping of the corresponding fluorescence image; for example, the ranking index is set to a mean of all the values of the mapped fluorescence image. The processor then adds the ranking index to the processed fluorescence image (in the corresponding repository). The processor at block 581 verifies whether a last processed fluorescence image has been taken into account. If not, the process returns to the block 575 to repeat the same operations on a next processed fluorescence image. Conversely (once all the processed fluorescence images have been taken into account), the loop is exit by descending into block 584.

The displayer drive now displays the processed fluorescence images and the processed comparison images (if any) with their descriptive labels together on the monitor of the imaging system (for example, in a same window). For example, in this way the surgeon may determine the (best) processed fluorescence image that provides the most useful representation of the body-part (such as, the highest amount of fluorescence agent). Particularly, when the processed fluorescence images are the mapped fluorescence images their common dynamic range allows a direct comparison of the detected fluorescence agent. In addition or in alternative, when the processed fluorescence images are the segmented/overlaid images, the highlighting of the detection segments facilitates the evaluation of the detected fluorescence agent, with its representation that is further contextualized in the anatomy of the body-part in case of the overlaid images. In any case, the ranking indexes associated with the processed fluorescence images further facilitate the recognition of the best processed fluorescence image, thanks to the corresponding quantification of the capability of the processed fluorescence images to detect the fluorescence agent. For example, the ranking indexes may be displayed by their values, by corresponding labels or colors associated with pre-defined ranges thereof (such as clearly positive, unclear and clearly negative, or red, yellow and green, respectively). As a result, the surgeon may determine which is the (best) imaging direction being the most effective for the surgeon procedure. In addition or in alternative, in this way the surgeon may compare the detected fluorescence agent in different regions of a same body-part of the patient (such as in healthy condition and with a lesion) and/or in other body-parts (such as in different relevant organs). Moreover, the processed comparison images allow inferring quantitative assessments of the detected fluorescence agent (especially when they are mapped together with the fluorescence images); for example, when the comparison images comprise the reference image this makes it possible to compare the detected fluorescence agent with known amounts thereof, whereas when the comparison images comprise the evaluation images this makes it possible to compare the detected fluorescence agent in the same type of body-part of other patients (in known conditions).

The flow of activity then branches at block 587 according to a choice of the surgeon. If the surgeon asks the operator to adjust the dynamic range, the operator at block 590 updates it accordingly via the user interface of the configurator (for example, by acting with the mouse on the corresponding slider to change the lower limit and/or the higher limit of the dynamic range). In the end, the configurator saves the updated version of the dynamic range into the configuration information repository (by replacing its previous version). The process then returns to the block 536 to repeat the same operations with the updated version of the dynamic range. If the surgeon instead asks the operator to adjust the segmentation threshold, the operator at block 593 updates it accordingly via the user interface of the segmenter (for example, by acting with the mouse on the corresponding slider to increase/decrease it). The process then returns to the block 560 to repeat the same operations with the updated version of the segmentation threshold. Otherwise, when the surgeon confirms that the process has been completed, the flow of activity ends to the concentric white/black stop circles 596 (after turning off the excitation light source and the white light source by the acquirer).

The result of the above-described process may then be used for different purposes. For example, a further (standard) imaging procedure may be performed by reciprocally arranging the imaging probe and the body-part according to the best imaging direction so determined. This allows operating in optimized (imaging) conditions, with a beneficial effect on the quality of the surgical procedure. In addition or in alternative, the surgeon may be provided with (comparable) representations of the body-part during the surgical procedure and at its beginning, or with (comparable) representations of the body-part during the surgical procedure and representations of other regions of the same body-part or of other body-parts at the beginning of the surgical procedure. This allows the surgeon to track the progress of the surgical procedure accurately.

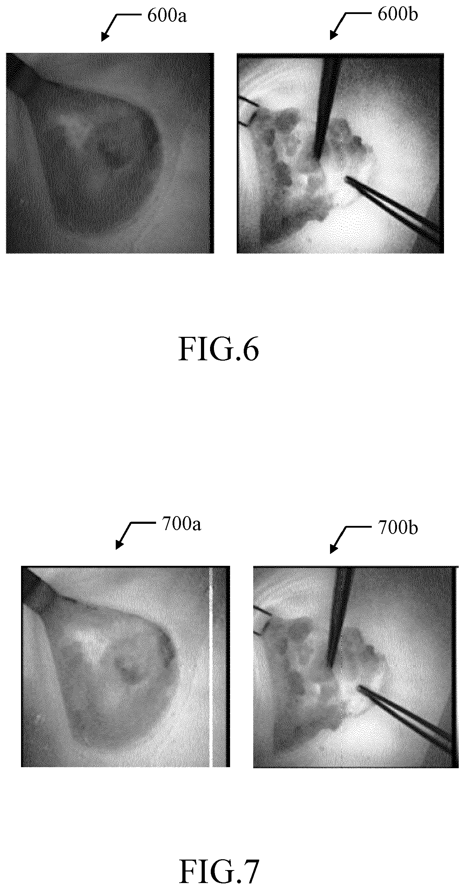

With reference now to FIG.6-FIG.9, different examples are shown of application of the solution according to an embodiment of the present disclosure.

Starting from FIG.6, two fluorescence images 600a and 600b are acquired of a same body-part undergoing a surgical procedure from different imaging directions. In this case, a comparison of the fluorescence images 600a and 600b is quite difficult, because of their different dynamic ranges.

Moving to FIG.7, corresponding mapped fluorescence images 700a and 700b are generated from these fluorescence images as described above. The comparison of the mapped fluorescence images 700a and 700b is now far easier because of their common dynamic range.

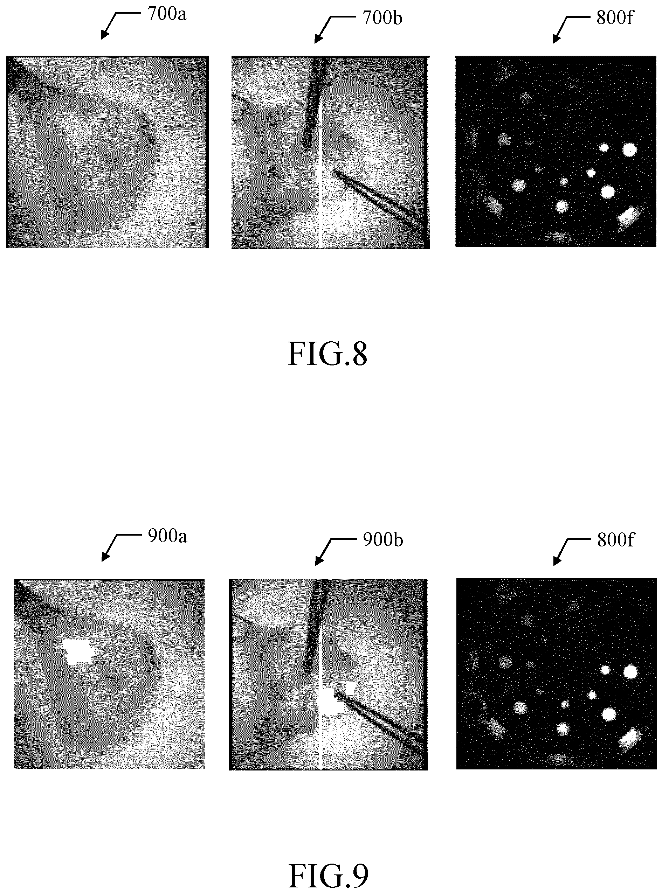

Moving to FIG.8, a reference image 800f is added. The reference image 800f shows different (known) concentrations of the fluorescence agent, increasing moving counter-clockwise from a 12 o'clock position. This allows comparing the fluorescence agent shown in the mapped fluorescence images 700a,700b with its known amounts shown in the reference image 800f.

Moving to FIG.9, corresponding segmented images 900a and 900b are generated from these mapped fluorescence images as described above. The segmented images 900a and 900b, again shown together with the reference image 800f, further facilitate the evaluation of the detected fluorescence agent (*i.e.*, its comparison between the segmented images 900a and 900b, and its quantification with respect to the reference image 800f).

Modifications

Naturally, in order to satisfy local and specific requirements, a person skilled in the art may apply many logical and/or physical modifications and alterations to the present disclosure. More specifically, although this disclosure has been described with a certain degree of particularity with reference to one or more embodiments thereof, it should be understood that various omissions, substitutions and changes in the form and details as well as other embodiments are possible. Particularly, different embodiments of the present disclosure may even be practiced without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present disclosure may be incorporated in any other embodiment as a matter of general design choice. Moreover, items presented in a same group and different embodiments, examples or alternatives are not to be construed as *de facto* equivalent to each other (but they are separate and autonomous entities). In any case, each numerical value should be read as modified according to applicable tolerances; particularly, unless otherwise indicated, the terms "substantially", "about", "approximately" and the like should be understood as within 10%, preferably 5% and still more preferably 1%. Moreover, each range of numerical values should be intended as expressly specifying any possible number along the *continuum* within the range (comprising its end points). Ordinal or other qualifiers are merely used as labels to distinguish elements with the same name but do not by themselves connote any priority, precedence or order. The terms include, comprise, have, contain, involve and the like should be intended with an open, non-exhaustive meaning (*i.e.*, not limited to the recited items), the terms based on, dependent on, according to, function of and the like should be intended as a non-exclusive relationship (*i.e.*, with possible further variables involved), the term a/an should be intended as one or more items (unless expressly indicated otherwise), and the term means for (or any means-plus-function formulation) should be intended as any structure adapted to or configured for carrying out the relevant function.

For example, an embodiment provides a method for imaging one or more body-parts of a patient in a medical application. However, the method may be used in any medical application (for example, surgery, diagnostics, therapy, laboratory analysis and so on) for imaging any number and type of body-parts (for example, each representing one or more organs, such as liver, prostate or heart, a region of an organ, such as in healthy/pathological condition, a quadrant of an abdomen and the like, a tissue and so on) of any patient (for example, a human being, an animal, acquired from the patient, acquired from samples extracted from the patient and so on). In any case, although the method may facilitate the task of a physician, it provides intermediate results that may help him/her but with the medical activity *stricto sensu* that is always made by the physician himself/herself.

In an embodiment, the method comprises the following steps under the control of a computing device. However, the computing device may be of any type (see below).

In an embodiment, the method comprises providing (to the computing device) a plurality of luminescence images of the body-parts. However, the luminescence images may have been acquired at any time (for example, during one or more medical procedures, during one or more laboratory analyses, any combination thereof and so on) and they may be provided in any way (for example, acquired directly, transferred with a removable storage unit, uploaded via a network and so on); moreover, the luminescence images may relate to the body-parts in any way (for example, representing body-parts taken from different imaging directions, different regions of the body-parts, different body-parts, any combination thereof and so on).

In an embodiment, each of the luminescence images comprises a plurality of values representative of a luminescence light being emitted by a luminescence substance from corresponding locations of the body-parts. However, each luminescence image may have any size and shape (for example, a whole frame or a Region Of Interest (ROI) thereof) and it may comprise values of any type and for any locations (for example, gray-scale or colors values, for pixels or voxels, and so on). The luminescence light may be of any type (for example, NIR, Infra-Red (IR), visible and so on) and it may be emitted in any way (for example, in response to a corresponding excitation light or more generally to any other excitation different from heating) by any extrinsic/intrinsic or exogenous/endogenous luminescence substance (for example, any luminescence agent, any natural luminescence component, based on any luminescence phenomenon, such as fluorescence, phosphorescence, chemiluminescence, bio-luminescence, induced Raman-radiation, and so on).

In an embodiment, the method comprises determining (by the computing device) a global range from a lowest one to a highest one of the values of all the luminescence images. However, the global range may be determined in any way (for example, from all the values of the luminescence images indiscriminately, filtered to remove their outliers, taking into account the luminescence images only or the comparison images as well, and so on).

In an embodiment, the method comprises determining (by the computing device) a mapping function mapping the global range to a dynamic range of a displayer. However, the mapping function may be of any type (for example, linear, logarithmic and so on) and for any displayer (for example, a monitor, virtual glasses, a printer and so on).

In an embodiment, the method comprises mapping (by the computing device) the luminescence images into corresponding mapped luminescence images each by converting the values of the corresponding luminescence image according to the mapping function. However, the luminescence images may be mapped for any purpose (for example, to adjust, log-compress, saturate and so on their values).

In an embodiment, the method comprises displaying (by the computing device) processed images comprising the mapped luminescence images together on the displayer. However, the processed images may be of any type (for example, only the mapped luminescence images, further comprising the (mapped) comparison images, the segmented images and/or the overlaid images) and they may be displayed in any way (for example, locally or remotely, with or without any descriptive labels, with or without any ranking indexes, and so on).

Further embodiments provide additional advantageous features, which may however be omitted at all in a basic implementation.

Particularly, in an embodiment the method comprises providing (to the computing device) the luminescence images being acquired from the patient and/or from one or more samples extracted from the patient. However, the luminescence images may be acquired from the patient in any way (for example, from the patient being either alive or dead, in one or more medical procedures of any type, such as with one or more luminescence images acquired during a surgical/therapeutic procedure on the body-parts together with one or more luminescence images acquired during a previous diagnostic procedure of the same body-parts, with the luminescence images acquired during different therapeutic procedures on the same body-parts and so on), from any number and type of samples (for example, excisional biopsy, core biopsy and so on) or in any combination thereof (for example, by providing one or more luminescence images acquired from the patient during any medical procedure on the body-parts together with one or more luminescence images acquired from one or more samples of the same body-parts extracted from the patient before performing the medical procedure).

In an embodiment the method comprises determining (by the computing device) the global range from the lowest value to the highest value of the values of all the luminescence images being filtered to remove outliers thereof. However, the values of the luminescence images may be filtered in any way (for example, by discarding the values below and above any percentiles thereof, the values below and above any multiple of the interquartile range, the values whose Z-score is below and above any threshold, such as $\pm3$, and so on) and at any time (for example, by disregarding the outliers during the determination of the global range, by resetting the outliers in the luminescence images beforehand and so on).

In an embodiment, the method comprises providing (to the computing device) the luminescence images representing a common one of the body-parts from different imaging directions, different regions of a common one of the body-parts and/or different body-parts. However, the luminescence images may relate to any number and type of imaging directions, regions, body-parts or any combination thereof (for example, partial, different and additional imaging directions, regions and body-parts with respect to the ones mentioned above).

In an embodiment, the method comprises prompting (by the computing device) a user to set corresponding imaging arrangements of the patient for acquiring the luminescence images in succession. However, the user may be prompted in any way (for example, by outputting corresponding visual messages, vocal messages and so on) to set any imagining arrangements of the patient (for example, different imaging directions of a common body-part, different regions of a common body-part, different body-parts and so on).

In an embodiment, the method comprises acquiring (by the computing device) each of the luminescence images in response to a confirmation by the user of the corresponding imaging arrangement. However, the confirmation may be provided in any way (for example, by clicking a button, pressing a key, uttering a command and so on); in any case, nothing prevents acquiring the luminescence images freely, with or without the possibility of entering the corresponding descriptive labels manually.

In an embodiment, the method comprises receiving (by the computing device) a manual adjustment of the dynamic range. However, the manual adjustment of the dynamic range may be provided in any way (for example, qualitatively or quantitatively, in relative or absolute terms, via any input unit, such as a slider, up/down buttons, input boxes and so on).

In an embodiment, the method comprises repeating (by the computing device), said determining the mapping function, said mapping the luminescence images and said displaying the processed images in response to the manual adjustment of the dynamic range. However, these operations may be repeated in any way (for example, by replacing the mapped luminescence images with their new version, by displaying the different versions of the mapped luminescence images together for their comparison and so on).

In an embodiment, the method comprises calculating (by the computing device) corresponding ranking indexes of the mapped luminescence images each indicative of a quality of said mapping the corresponding luminescence image according to a content of the corresponding mapped luminescence image. However, the ranking indexes may be of any type (for example, based on one or more central tendency statical parameters, one or more dispersion statistical parameters, any combination thereof and so on).

In an embodiment, the method comprises displaying (by the computing device) the processed images together in association with the corresponding ranking indexes of the mapped luminescence images on the displayer. However, the ranking indexes may be associated with the mapped luminescence images in any way (for example, by displaying them close to the corresponding processed images in any way, such as quantitatively/qualitatively with any visual indicators, such as numbers, graphs, labels, colors and the like, by simply ordering the processed images according to their ranking indexes and so on).

In an embodiment, the method comprises calculating (by the computing device) the ranking indexes of each of the mapped luminescence images according to a central tendency statistical parameter of the values of the mapped luminescence image. However, the central tendency statistical parameter may be of any type (for example, mean, median, mode and so on).

In an embodiment the method comprises providing (by the computing device) at least one segmentation threshold being common for starting images equal to all the luminescence images or the mapped luminescence images for separating the values of each of the starting images into a separation number of segments.

However, the segmentation thresholds may be in any number and provided in any way (for example, determined automatically, set manually and so on). In any case, the possibility is not excluded of implementing the mapping only (without any segmentation), the segmentation only (without any mapping), the mapping followed by the segmentation, or the segmentation followed by the mapping (applied to the whole fluorescence images or separately to their segments).

In an embodiment, the method comprises generating (by the computing device) corresponding segmented images from the starting images each by segmenting the corresponding starting image into said separation number of segments according to a comparison of the values of the starting image with the segmentation threshold. However, each starting image may be segmented in any way according to the segmentation threshold (for example, binary, multilevel, multiband and so).

In an embodiment, the method comprises displaying (by the computing device) the processed images being further based on the segmented images together on the displayer. However, the processed images may be based on the segmented images in any way (for example, comprising the segmented images, the segmented imaged overlaid onto corresponding reflectance images and so on). In any case, the possibility is not excluded of using the segmented images in a different way, even without their display (for example, by calculating and outputting consolidated values of the different segments, any comparison thereof and so on).

In an embodiment, the method comprises segmenting (by the computing device) each of the starting images into a detection one of the segments and a non-detection one of the segments representative of detection and of non-detection, respectively, of the luminescence substance according to the comparison of the values of the starting image with the segmentation threshold. However, the detection/non-detection segments of each segmented image may be used to display the corresponding processed image in any way (for example, with the values of the non-detection segment reset to black, with the values of the detection segment in color and the values of the non-detection segment in back-and-white, and so on). In any case, the possibility is not excluded of segmenting the starting images in a different way (for example, a non-detection segment and multiple detection segments of corresponding different luminescence substances, and so on).

In an embodiment, the method comprises determining (by the computing device) said at least one segmentation threshold according to the values of all the starting images for separating the values of all the starting images into said separation number of groups. However, the segmentation thresholds may be determined in any way (for example, with histogram shape-based, clustering-based, entropy-based and so on techniques).

In an embodiment, the method comprises receiving (by the computing device) a manual adjustment of the segmentation threshold. However, the manual adjustment of the segmentation threshold may be provided in any way (either the same or different with respect to the dynamic range).

In an embodiment, the method comprises repeating (by the computing device) said segmenting the starting images and said displaying the processed images in response to the manual adjustment of the segmentation threshold. However, these operations may be repeated in any way (for example, by replacing the segmented images with their new version, by displaying the different versions of the segmented images together for their comparison and so on).

In an embodiment, the method comprises calculating (by the computing device) corresponding ranking indexes of the segmented images each indicative of a quality of said segmenting the corresponding starting image according to a content of the corresponding segmented image. However, the ranking indexes may be of any type (for example, based on any comparison of one or more central tendency statical parameters, one or more dispersion statistical parameters, any combination thereof and so on).

In an embodiment, the method comprises displaying (by the computing device) the processed images together in association with the corresponding ranking indexes of the segmented images on the displayer. However, the ranking indexes may be associated with the segmented images in any way (for example, either the same or different with respect to the mapped luminescence images).

In an embodiment, the method comprises calculating (by the computing device) the ranking index of each of the segmented images according to a comparison between corresponding central tendency statistical parameters of the values of the segments of the segmented image. However, the ranking index may be based on any comparison (for example, ratio, difference and so on) of any central tendency statistical parameter (for example, either the same or different with respect to the mapped luminescence images).

In an embodiment, the method comprises providing (to the computing device) a plurality of reflectance images corresponding to the luminescence images. However, the reflectance images may be provided in any way (either the same or different with respect to the luminescence images).

In an embodiment, each of the reflectance images comprises a plurality of values for the locations of the body-parts each representative of a visible light being reflected from the corresponding location. However, the reflectance images may comprise values of any type (either the same or different with respect to the luminescence images) for the same locations of the body-part either directly or after a suitable upscaling/-downscaling; moreover, the values of the reflectance images may be representative of any visible light that is reflected by the body-part (for example, illuminated by any light causing no significant luminescence phenomenon, and so on).

In an embodiment, the method comprises generating (by the computing device) a corresponding plurality of overlaid images by overlaying the segmented images onto the corresponding reflectance images. However, the segmented images may be overlaid on the reflectance images in any way (for example, in color and black-and-white, with different colors and so on).

In an embodiment, the method comprises displaying (by the computing device) the processed images comprising the overlaid images together on the displayer. However, the possibility is not excluded of displaying the segmented images (in alternative or in addition to the overlaid images).

In an embodiment, the method comprises retrieving (by the computing device) one or more comparison images. However, the comparison images may be in any number and they may be retrieved in any way (for example, read from a mass memory, downloaded from a network, acquired locally and so on).

In an embodiment, each of the comparison images comprises a plurality of values representative of the luminescence light being emitted by the luminescence substance from corresponding locations of a comparison entity. However, each comparison image may comprise any number of values for any locations (either the same or different with respect to the fluorescence images) of any comparison entity (for example, reference devices, further body-parts of further patients, any combination thereof and so on).

In an embodiment, the method comprises determining (by the computing device) the global range further according to the values of all the comparison images. However, the global range may be determined in any way (for example, by using the comparison images as retrieved or after any pre-processing thereof, either the same or different with respect to the luminescence images, and so on); in any case, the possibility is not excluded of using separate global ranges for the luminescence images and for the comparison images.

In an embodiment, the method comprises mapping (by the computing device) the comparison images into corresponding mapped comparison images each by converting the values of the comparison image according to the mapping function. However, the comparison images may be mapped in any way (for example, either the same or different with respect to the luminescence images).

In an embodiment, the method comprises displaying (by the computing device) the processed images further comprising the mapped comparison images together on the displayer. However, the possibility is not excluded of displaying the comparison images in their original version (in alternative or in addition to the mapped comparison images).

In an embodiment, the method comprises retrieving (by the computing device) the comparison images comprising at least one reference image of a reference device having one or more sites containing corresponding known concentrations of the luminescence substance. However, the reference images may be in any number, each representing any reference device containing any number and type of sites (for example, with fixed/removable containers, such as vials, tubes and the like, filled with the same luminescence substance in different concentrations and/or with different luminescence substances, and so on).

In an embodiment, the method comprises retrieving (by the computing device) the comparison images comprising one or more evaluation images of one or more further body-parts of further patients corresponding to the body-parts of the patient. However, the evaluation luminescence images may be in any number, each representing body-parts of any patients (for example, acquired with the same imaging system, with different imaging systems, in different locations, in any healthy/pathological condition and so on).

In an embodiment, the luminescence substance is a luminescence agent being pre-administered to the patient before performing the method. However, the luminescence agent may be of any type (for example, any targeted luminescence agent, such as based on specific or non-specific interactions, any non-targeted luminescence agent, and so on) and it may have been pre-administered in any way (for example, with a syringe, an infusion pump, and so on) and at any time (for example, in advance, immediately before performing the method, continuously during it, and so on). In any case, this is a data-processing method that may be implemented independently of any interaction with the patient; moreover, the luminescence agent may also be administered to the patient in a non-invasive manner (for example, orally for imaging the gastrointestinal tract, via a nebulizer into the airways, via topical spray application or topical introduction during a surgical procedure, and so on), or in any case without any substantial physical intervention on the patient that would require professional medical expertise or entail any health risk for him/her (for example, intramuscularly).

In an embodiment, the luminescence substance is a fluorescence substance (with the luminescence images being fluorescence images and the values of each of the fluorescence images being representative of a fluorescence light emitted by the fluorescence substance from the corresponding locations of the body-parts illuminated by an excitation light of the fluorescence substance). However, the fluorescence substance may be of any type (for example, extrinsic or intrinsic, exogenous or endogenous, and so on) and responsive to any excitation light (for example, of NIR, IR, visible and so on type).

An embodiment provides another method for imaging a patient in a medical application. In an embodiment, the method comprises the following steps under the control of a computing device. In an embodiment, the method comprises providing (to the computing device) a plurality of luminescence images of one or more body-parts of the patient. In an embodiment, each of the luminescence images comprises a plurality of values representative of a luminescence light being emitted by a luminescence substance from corresponding locations of the body-parts. In an embodiment, the method comprises determining (by the computing device) at least one segmentation threshold for separating the values of all the luminescence images into a separation number of groups according to the values of all the luminescence images. In an embodiment, the method comprises segmenting (by the computing device) the luminescence images each into said separation number of segments according to a comparison of the values of the luminescence image with the segmentation threshold. However, each of these steps may be performed in any way and with the addition of the optional features as above.

Generally, similar considerations apply if the same solution is implemented with an equivalent method (by using similar steps with the same functions of more steps or portions thereof, removing some steps being non-essential, or adding further optional steps); moreover, the steps may be performed in a different order, concurrently or in an interleaved way (at least in part).

An embodiment provides a computer program, which is configured for causing a computing device to perform the above-mentioned method when the computer program is executed on the computing device. An embodiment provides a computer program product, which comprises a computer readable storage medium embodying a computer program, the computer program being loadable into a working memory of a computing device thereby configuring the computing device to perform the same method. However, the (computer) program may be implemented as a stand-alone module, as a plug-in for a pre-existing software program (for example, a manager of the imaging system) or even directly in the latter. In any case, similar considerations apply if the program is structured in a different way, or if additional modules or functions are provided; likewise, the memory structures may be of other types, or may be replaced with equivalent entities (not necessarily consisting of physical storage media). The program may take any form suitable to be used by any computing device (see below), thereby configuring the computing device to perform the desired operations; particularly, the program may be in the form of external or resident software, firmware, or microcode (either in object code or in source code, for example, to be compiled or interpreted). Moreover, it is possible to provide the program on any computer readable storage medium. The storage medium is any tangible medium (different from transitory signals *per se*) that may retain and store instructions for use by the computing device. For example, the storage medium may be of the electronic, magnetic, optical, electromagnetic, infrared, or semiconductor type; examples of such storage medium are fixed disks (where the program may be pre-loaded), removable disks, memory keys (for example, of USB type), and the like. The program may be downloaded to the computing device from the storage medium or via a network (for example, the Internet, a wide area network and/or a local area network comprising transmission cables, optical fibers, wireless connections, network devices); one or more network adapters in the computing device receive the program from the network and forward it for storage into one or more storage devices of the computing device. In any case, the solution according to an embodiment of the present disclosure lends itself to be implemented even with a hardware structure (for example, by electronic circuits integrated in one or more chips of semiconductor material, such as a Field Programmable Gate Array (FPGA) or an Application-Specific Integrated Circuit (ASIC), or with a combination of software and hardware suitably programmed or otherwise configured.

An embodiment provides a computing device, which comprises means configured for performing the steps of the above-mentioned method. An embodiment provides a computing device comprising a circuitry (i.e., any hardware suitably configured, for example, by software) for performing each step of the same method. However, the computing device may be of any type (for example, a central unit of an imaging system, a separate computer and so on).

An embodiment provides an imaging system comprising the above-mentioned computing device. However, the imaging system may be of any type (for example, a guided surgery equipment, an endoscope, a laparoscope and so on).

In an embodiment, the imaging system comprises an acquisition unit for acquiring the luminescence images. However, the acquisition unit may be of any type (for example, based on any number and type of lenses, wave guides, mirrors, EMCCD, CMOS, InGaAs or PMT sensors, and so on).

In an embodiment, the imaging system comprises an illumination unit for applying the excitation light to the body-parts. However, the illumination unit may be of any type (for example, based on laser, LEDs, UV lamps, and so on).

In an embodiment, the illumination unit is further for applying a white light to the body-parts. However, the illumination unit may apply the white light in any way (for example, with LEDs, halogen/Xenon lamps and so on).

In an embodiment, the acquisition unit is further for acquiring the reflectance images. However, the reflectance images may be acquired in any way (for example, with any number and type of lenses, wave guides, mirrors, CCD, ICCD, CMOS sensors, and so on).

Generally, similar considerations apply if the computing device and the imaging system each has a different structure or comprises equivalent components, or it has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

An embodiment provides a surgical method comprising the following steps. The body-parts are imaged according to the above-mentioned method thereby displaying the processed images together on the displayer during a surgical procedure of the patient. The patient is operated according to said displaying the processed images. However, the proposed method may find application in any kind of surgical method in the broadest meaning of the term (for example, for curative purposes, for prevention purposes, for aesthetic purposes, and so on) and for acting on any kind of body-part(s) of any patient (see above).

An embodiment provides a diagnostic method comprising the following steps. The body-parts are imaged according to the above-mentioned method thereby displaying the processed images together on the displayer during a diagnostic procedure of the patient. A health condition of the patient is evaluated according to said displaying the processed images. However, the proposed method may find application in any kind of diagnostic applications in the broadest meaning of the term (for example, aimed at discovering new lesions, at monitoring known lesions, and so on) and for analyzing any kind of body-part(s) of any patient (see above).

An embodiment provides a therapeutic method comprising the following steps. The body-parts are imaged according to the above-mentioned method thereby displaying the processed images together on the display during a therapeutic procedure of the patient. The patient is treated according to said displaying the processed images. However, the proposed method may find application in any kind of therapeutic method in the broadest meaning of the term (for example, aimed at curing a pathological condition, at avoiding its progress, at preventing the occurrence of a pathological condition, or simply at ameliorating a comfort of the patient) and for acting on any kind of body-part(s) of any patient (see above).

**Claims**

1. A method (500) for imaging one or more body-parts (109) of a patient (106) in a medical application, wherein the method (500) comprises, under the control of a computing device (121):

   providing (506-521), to the computing device (121), a plurality of luminescence images of the body-parts (109), each of the luminescence images comprising a plurality of values representative of a luminescence light being emitted by a luminescence substance from corresponding locations of the body-parts (109),

scanning (533), by the computing device (121), the values of all the luminescence images for determining a lowest value and a highest value thereof defining a lower limit and a higher limit, respectively, of a global range of all the luminescence images,

determining (536), by the computing device (121), a mapping function mapping the global range to a dynamic range of a displayer (169),

mapping (539-545), by the computing device (121), the luminescence images into corresponding mapped luminescence images each by converting the values of the corresponding luminescence image according to the mapping function, and

displaying (584), by the computing device (121), processed images comprising the mapped luminescence images together on the displayer (169).

2. The method (500) according to claim 1, wherein the method (500) comprises:
determining (533), by the computing device (121), the lowest value and the highest value by filtering out outliers of the values of all the luminescence images.

3. The method (500) according to claim 1 or 2, wherein the method (500) comprises:
providing (506-521), to the computing device (121), the luminescence images representing a common one of the body-parts (109) from different imaging directions, the common body-part (109) in different medical procedures, the common body-part (109) at the beginning and during a surgical procedure, different regions of the common body-part (109) and/or different body-parts.

4. The method (500) according to any claim from 1 to 3, wherein the method (500) comprises:

   receiving (590), by the computing device (121), a manual adjustment of the dynamic range, and repeating, by the computing device (121), said determining (536) the mapping function, said mapping (539-545) the luminescence images and said displaying (584) the processed images in response to the manual adjustment of the dynamic range.

5. The method (500) according to any claim from 1 to 4, wherein the method (500) comprises:

   calculating (575-581), by the computing device (121), corresponding ranking indexes of the mapped luminescence images each indicative of a quality of said step of mapping (539-545) the corresponding luminescence image according to one or more central tendency statistical parameters and/or one or more dispersion statistical parameters of the values of the corresponding mapped luminescence image, and

displaying (584), by the computing device (121), the processed images together in association with the corresponding ranking indexes of the mapped luminescence images on the displayer (169).

6. The method (500) according to any claim from 1 to 5, wherein the method (500) comprises:

   providing (557), by the computing device (121), at least one segmentation threshold being common for starting images equal to all the luminescence images or the mapped luminescence images for separating the values of each of the starting images into a separation number of segments,

   generating (560-569), by the computing device (121), corresponding segmented images from the starting images each by segmenting the corresponding starting image into said separation number of segments according to a comparison of the values of the starting image with the segmentation threshold, and

   displaying (584), by the computing device (121), the processed images being further based on the segmented images together on the displayer (169).

7. The method (500) according to claim 6, wherein the method (500) comprises:
segmenting (560-569), by the computing device (100), each of the starting images into a detection one of the segments and a non-detection one of the segments representative of detection and of non-detection, respectively, of the luminescence substance according to the comparison of the values of the starting image with the segmentation threshold.

8. The method (500) according to claim 6 or 7, wherein the method (500) comprises:
determining (557), by the computing device (121), said at least one segmentation threshold according to the values of all the starting images for separating the values of all the starting images into said separation number of segments.

9. The method (500) according to any claim from 6 to 8, wherein the method (500) comprises:

   receiving (593), by the computing device (121), a manual adjustment of the segmentation threshold, and

repeating, by the computing device (121), said segmenting (560-569) the starting images and said displaying (584) the processed images in response to the manual adjustment of the segmentation threshold.

10. The method (500) according to any claim from 6 to 9, wherein the method (500) comprises:

calculating (575-581), by the computing device (121), corresponding ranking indexes of the segmented images each indicative of a quality of said step of segmenting (560-569) the corresponding starting image according to a comparison among one or more central tendency statistical parameters and/or one or more dispersion statistical parameters of the values of the segments of the corresponding segmented image, and

displaying (584), by the computing device (121), the processed images together in association with the corresponding ranking indexes of the segmented images on the displayer (169).

11. The method (500) according to any claim from 1 to 10, wherein the method (500) comprises:

retrieving (524), by the computing device (100), one or more comparison images, each of the comparison images comprising a plurality of values representative of the luminescence light being emitted by the luminescence substance from corresponding locations of a comparison entity,

determining (533), by the computing device (121), the global range further according to the values of all the comparison images,

mapping (539-545), by the computing device (121), the comparison images into corresponding mapped comparison images each by converting the values of the comparison image according to the mapping function, and

displaying (584), by the computing device (121), the processed images further comprising the mapped comparison images together on the displayer (169).

12. The method (500) according to claim 11, wherein the method (500) comprises:

retrieving (524), by the computing device (121), the comparison images comprising at least one reference image of a reference device having one or more sites containing corresponding known concentrations of the luminescence substance and/or one or more evaluation images of one or more further body-parts of further patients corresponding to the body-parts (109) of the patient (106).

13. A computer program (400) configured for causing a computing device (121) to perform the method (500) according to any claim from 1 to 12 when the computer program is executed on the computing device (121).

14. A computing device (121) comprising means (400) configured for performing the steps of the method (500) according to any claim from 1 to 12.

15. An imaging system (100) comprising the computing device (121) according to claim 14, and an acquisition unit (136-148) for acquiring the luminescence images.

**Patentansprüche**

1. Verfahren (500) zur Bildgebung eines oder mehrerer Körperteile (109) eines Patienten (106) in einer medizinischen Anwendung, wobei das Verfahren (500) unter der Steuerung einer Rechenvorrichtung (121) Folgendes umfasst:

Bereitstellen (506-521) einer Vielzahl von Lumineszenzbildern der Körperteile (109) für die Rechenvorrichtung (121), wobei jedes der Lumineszenzbilder eine Vielzahl von Werten umfasst, die ein Lumineszenzlicht darstellen, das durch eine Lumineszenzsubstanz von entsprechenden Stellen der Körperteile (109) emittiert wird,

Abtasten (533), durch die Rechenvorrichtung (121), der Werte aller Lumineszenzbilder zum Bestimmen eines niedrigsten Werts und eines höchsten Werts davon, die eine untere Grenze beziehungsweise eine obere Grenze eines globalen Bereichs aller Lumineszenzbilder definieren,

Bestimmen (536), durch die Rechenvorrichtung (121), einer Abbildungsfunktion, die den globalen Bereich auf einen Dynamikbereich einer Anzeigeeinrichtung (169) abbildet,

Abbilden (539-545) der Lumineszenzbilder durch die Rechenvorrichtung (121) in entsprechende abgebildete Lumineszenzbilder, jeweils durch Umwandeln der Werte des entsprechenden Lumineszenzbildes gemäß der Abbildungsfunktion und

Anzeigen (584), durch die Rechenvorrichtung (121), verarbeiteter Bilder, die die abgebildeten Lumineszenzbilder umfassen, zusammen auf der Anzeigeeinrichtung (169).

2. Verfahren (500) nach Anspruch 1, wobei das Verfahren (500) Folgendes umfasst:

Bestimmen (533), durch die Rechenvorrichtung (121), des niedrigsten Werts und des höchsten Werts durch Herausfiltern von Ausreißern der Werte aller Lumineszenzbilder.

3. Verfahren (500) nach Anspruch 1 oder 2, wobei das Verfahren (500) Folgendes umfasst:
Bereitstellen (506-521), für die Rechenvorrichtung (121), der Lumineszenzbilder, die ein gemeinsames der Körperteile (109) aus verschiedenen Bildgebungsrichtungen, das gemeinsame Körperteil (109) in verschiedenen medizinischen Eingriffen, das gemeinsame Körperteil (109) zu Beginn und während eines chirurgischen Eingriffs, verschiedene Regionen des gemeinsamen Körperteils (109) und/oder verschiedene Körperteile darstellen.

4. Verfahren (500) nach einem der Ansprüche 1 bis 3, wobei das Verfahren (500) Folgendes umfasst:

Empfangen (590), durch die Rechenvorrichtung (121), einer manuellen Anpassung des Dynamikbereichs und
Wiederholen, durch die Rechenvorrichtung (121), des Bestimmens (536) der Abbildungsfunktion, des Abbildens (539-545) der Lumineszenzbilder und des Anzeigens (584) der verarbeiteten Bilder als Reaktion auf die manuelle Anpassung des Dynamikbereichs.

5. Verfahren (500) nach einem der Ansprüche 1 bis 4, wobei das Verfahren (500) Folgendes umfasst:

Berechnen (575-581), durch die Rechenvorrichtung (121), entsprechender Bewertungsindizes der abgebildeten Lumineszenzbilder, die jeweils eine Qualität des Schritts des Abbildens (539-545) des entsprechenden Lumineszenzbildes angeben, gemäß einem oder mehreren statistischen Parametern der Zentraltendenz und/oder einem oder mehreren statistischen Streuungsparametern der Werte des entsprechenden abgebildeten Lumineszenzbildes und
Anzeigen (584), durch die Rechenvorrichtung (121), der verarbeiteten Bilder zusammen in Verbindung mit den entsprechenden Bewertungsindizes der abgebildeten Lumineszenzbilder auf der Anzeigeeinrichtung (169).

6. Verfahren (500) nach einem der Ansprüche 1 bis 5, wobei das Verfahren (500) Folgendes umfasst:

Bereitstellen (557), durch die Rechenvorrichtung (121), mindestens eines Segmentierungsschwellenwerts, der Startbildern gemeinsam ist und gleich ist für alle Lumineszenzbilder oder die abgebildeten Lumineszenzbilder, zum Trennen der Werte jedes der Startbilder in eine Trennungsanzahl von Segmenten,

Erzeugen (560-569), durch die Rechenvorrichtung (121), entsprechender segmentierter Bilder aus den Startbildern, jeweils durch Segmentieren des entsprechenden Startbildes in die Trennungsanzahl von Segmenten gemäß einem Vergleich der Werte des Startbildes mit dem Segmentierungsschwellenwert und
Anzeigen (584), durch die Rechenvorrichtung (121), der verarbeiteten Bilder ferner basierend auf den segmentierten Bildern zusammen auf der Anzeigeeinrichtung (169).

7. Verfahren (500) nach Anspruch 6, wobei das Verfahren (500) Folgendes umfasst:
Segmentieren (560-569), durch die Rechenvorrichtung (100), jedes der Startbilder in ein Erfassungssegment der Segmente und ein Nicht-Erfassungssegment der Segmente, die eine Erfassung beziehungsweise Nicht-Erfassung der Lumineszenzsubstanz darstellen, gemäß dem Vergleich der Werte des Startbildes mit dem Segmentierungsschwellenwert.

8. Verfahren (500) nach Anspruch 6 oder 7, wobei das Verfahren (500) Folgendes umfasst:
Bestimmen (557), durch die Rechenvorrichtung (121), des mindestens einen Segmentierungsschwellenwerts gemäß den Werten aller Startbilder zum Trennen der Werte aller Startbilder in die Trennungsanzahl von Segmenten.

9. Verfahren (500) nach einem der Ansprüche 6 bis 8, wobei das Verfahren (500) Folgendes umfasst:

Empfangen (593), durch die Rechenvorrichtung (121), einer manuellen Anpassung des Segmentierungsschwellenwerts und
Wiederholen, durch die Rechenvorrichtung (121), des Segmentierens (560-569) der Startbilder und des Anzeigens (584) der verarbeiteten Bilder als Reaktion auf die manuelle Anpassung des Segmentierungsschwellenwerts.

10. Verfahren (500) nach einem der Ansprüche 6 bis 9, wobei das Verfahren (500) Folgendes umfasst:

Berechnen (575-581), durch die Rechenvorrichtung (121), entsprechender Bewertungsindizes der segmentierten Bilder, die jeweils eine Qualität des Schritts des Segmentierens (560-569) des entsprechenden Startbildes angeben, gemäß einem Vergleich zwischen einem oder mehreren statistischen Parametern der Zentraltendenz und/oder einem oder mehreren statistischen Streuungsparametern der Werte der Segmente des entsprechenden segmentierten Bildes und
Anzeigen (584), durch die Rechenvorrichtung (121), der verarbeiteten Bilder zusammen in Verbindung mit den entsprechenden Bewertungsindizes der segmentierten Bilder auf der Anzeigeeinrichtung (169).

11. Verfahren (500) nach einem der Ansprüche 1 bis 10, wobei das Verfahren (500) Folgendes umfasst:

> Abrufen (524) eines oder mehrerer Vergleichsbilder durch die Rechenvorrichtung (100), wobei jedes der Vergleichsbilder eine Vielzahl von Werten umfasst, die das Lumineszenzlicht darstellen, das durch die Lumineszenzsubstanz von entsprechenden Stellen einer Vergleichseinheit emittiert wird,
> Bestimmen (533), durch die Rechenvorrichtung (121), des globalen Bereichs ferner gemäß den Werten aller Vergleichsbilder,
> Abbilden (539-545) der Vergleichsbilder durch die Rechenvorrichtung (121) in entsprechende abgebildete Vergleichsbilder, jeweils durch Umwandeln der Werte des Vergleichsbildes gemäß der Abbildungsfunktion und
> Anzeigen (584), durch die Rechenvorrichtung (121), der verarbeiteten Bilder, die ferner die abgebildeten Vergleichsbilder umfassen, zusammen auf der Anzeigeeinrichtung (169).

12. Verfahren (500) nach Anspruch 11, wobei das Verfahren (500) Folgendes umfasst:
Abrufen (524), durch die Rechenvorrichtung (121), der Vergleichsbilder, die mindestens ein Referenzbild einer Referenzvorrichtung mit einer oder mehreren Orten, die entsprechende bekannte Konzentrationen der Lumineszenzsubstanz enthalten, und/oder ein oder mehrere Auswertungsbilder eines oder mehrerer weiterer Körperteile weiterer Patienten, die den Körperteilen (109) des Patienten (106) entsprechen, umfassen.

13. Computerprogramm (400), dazu konfiguriert, eine Rechenvorrichtung (121) zu veranlassen, das Verfahren (500) nach einem der Ansprüche 1 bis 12 durchzuführen, wenn das Computerprogramm auf der Rechenvorrichtung (121) ausgeführt wird.

14. Rechenvorrichtung (121), umfassend Mittel (400), die zum Durchführen der Schritte des Verfahrens (500) nach einem der Ansprüche 1 bis 12 konfiguriert sind.

15. Bildgebungssystem (100), umfassend die Rechenvorrichtung (121) nach Anspruch 14 und eine Aufnahmeeinheit (136-148) zum Aufnehmen der Lumineszenzbilder.

**Revendications**

1. Procédé (500) permettant l'imagerie d'une ou plusieurs parties corporelles (109) d'un patient (106) dans une application médicale, ledit procédé (500) comprenant, sous la commande d'un dispositif informatique (121) :

> la fourniture (506-521), au dispositif informatique (121), d'une pluralité d'images de luminescence des parties corporelles (109), chacune des images de luminescence comprenant une pluralité de valeurs représentatives d'une lumière de luminescence émise par une substance de luminescence à partir d'emplacements correspondants des parties corporelles (109),
> le balayage (533), par le dispositif informatique (121), des valeurs de toutes les images de luminescence en vue de la détermination de la valeur la plus basse et de la valeur la plus haute de celles-ci définissant une limite inférieure et une limite supérieure, respectivement, d'une plage globale de toutes les images de luminescence,
> la détermination (536), par le dispositif informatique (121), d'une fonction de mappage mappant la plage globale à une plage dynamique d'un dispositif d'affichage (169),
> le mappage (539-545), par le dispositif informatique (121), des images de luminescence en images de luminescence mappées correspondantes, chacune en convertissant les valeurs de l'image de luminescence correspondante selon la fonction de mappage, et
> l'affichage (584), par le dispositif informatique (121), d'images traitées comprenant les images de luminescence mappées ensemble sur le dispositif d'affichage (169).

2. Procédé (500) selon la revendication 1, ledit procédé (500) comprenant :
la détermination (533), par le dispositif informatique (121), de la valeur la plus basse et de la valeur la plus haute en filtrant les valeurs aberrantes des valeurs de toutes les images de luminescence.

3. Procédé (500) selon la revendication 1 ou 2, ledit procédé (500) comprenant :
la fourniture (506-521), au dispositif informatique (121), des images de luminescence représentant une partie commune des parties corporelles (109) provenant de différentes directions d'imagerie, la partie corporelle commune (109) dans différentes procédures médicales, la partie corporelle commune (109) au début et durant une procédure chirurgicale, différentes zones de la partie corporelle commune (109) et/ou différentes parties corporelles.

**4.** Procédé (500) selon l'une quelconque des revendications 1 à 3, ledit procédé (500) comprenant :

la réception (590), par le dispositif informatique (121), d'un réglage manuel de la plage dynamique, et
la répétition, par le dispositif informatique (121), de ladite détermination (536) de la fonction de mappage, dudit mappage (539-545) des images de luminescence et dudit affichage (584) des images traitées en réponse au réglage manuel de la plage dynamique.

**5.** Procédé (500) selon l'une quelconque des revendications 1 à 4, ledit procédé (500) comprenant :

le calcul (575-581), par le dispositif informatique (121), d'indices de classement correspondants des images de luminescence mappées, chacun indiquant une qualité de ladite étape de mappage (539-545) de l'image de luminescence correspondante selon un ou plusieurs paramètres statistiques de tendance centrale et/ou un ou plusieurs paramètres statistiques de dispersion des valeurs de l'image de luminescence mappée correspondante, et
l'affichage (584), par le dispositif informatique (121), des images traitées ensemble en association avec les indices de classement correspondants des images de luminescence mappées sur le dispositif d'affichage (169).

**6.** Procédé (500) selon l'une quelconque des revendications 1 à 5, ledit procédé (500) comprenant :

la fourniture (557), par le dispositif informatique (121), d'au moins un seuil de segmentation commun pour des images de départ égales à toutes les images de luminescence ou les images de luminescence mappées pour séparer les valeurs de chacune des images de départ en un nombre de séparation de segments,
la génération (560-569), par le dispositif informatique (121), d'images segmentées correspondantes à partir des images de départ, chacune en segmentant l'image de départ correspondante en ledit nombre de séparation de segments selon une comparaison des valeurs de l'image de départ avec le seuil de segmentation, et
l'affichage (584), par le dispositif informatique (121), des images traitées, qui sont en outre basées sur les images segmentées, ensemble sur le dispositif d'affichage (169).

**7.** Procédé (500) selon la revendication 6, ledit procédé (500) comprenant :
la segmentation (560-569), par le dispositif informatique (100), de chacune des images de départ en un segment de détection des segments et un segment de non-détection des segments représentatifs de la détection et de la non-détection, respectivement, de la substance de luminescence selon la comparaison des valeurs de l'image de départ avec le seuil de segmentation.

**8.** Procédé (500) selon la revendication 6 ou 7, ledit procédé (500) comprenant :
la détermination (557), par le dispositif informatique (121), dudit au moins un seuil de segmentation selon les valeurs de toutes les images de départ pour séparer les valeurs de toutes les images de départ en ledit nombre de séparation de segments.

**9.** Procédé (500) selon l'une quelconque des revendications 6 à 8, ledit procédé (500) comprenant :

la réception (593), par le dispositif informatique (121), d'un réglage manuel du seuil de segmentation, et
la répétition, par le dispositif informatique (121), de ladite segmentation (560-569) des images de départ et dudit affichage (584) des images traitées en réponse au réglage manuel du seuil de segmentation.

**10.** Procédé (500) selon l'une quelconque des revendications 6 à 9, ledit procédé (500) comprenant :

le calcul (575-581), par le dispositif informatique (121), d'indices de classement correspondants des images segmentées, chacun indiquant une qualité de ladite étape de segmentation (560-569) de l'image de départ correspondante selon une comparaison entre un ou plusieurs paramètres statistiques de tendance centrale et/ou un ou plusieurs paramètres statistiques de dispersion des valeurs des segments de l'image segmentée correspondante, et
l'affichage (584), par le dispositif informatique (121), des images traitées ensemble en association avec les indices de classement correspondants des images segmentées sur le dispositif d'affichage (169).

**11.** Procédé (500) selon l'une quelconque des revendications 1 à 10, ledit procédé (500) comprenant :

la récupération (524), par le dispositif informatique (100), d'une ou de plusieurs images de comparaison, chacune des images de comparaison comprenant une pluralité de valeurs représentatives de la lumière de luminescence émise par la substance de luminescence à partir d'emplacements correspondants d'une entité de comparaison,

la détermination (533), par le dispositif informatique (121), de la plage globale en outre selon les valeurs de toutes les images de comparaison,

le mappage (539-545), par le dispositif informatique (121), des images de comparaison en images de comparaison mappées correspondantes, chacune en convertissant les valeurs de l'image de comparaison selon la fonction de mappage, et

l'affichage (584), par le dispositif informatique (121), des images traitées comprenant en outre les images de comparaison mappées ensemble sur le dispositif d'affichage (169).

12. Procédé (500) selon la revendication 11, ledit procédé (500) comprenant :
la récupération (524), par le dispositif informatique (121), des images de comparaison comprenant au moins une image de référence d'un dispositif de référence possédant un ou plusieurs sites contenant des concentrations connues correspondantes de la substance de luminescence et/ou une ou plusieurs images d'évaluation d'une ou de plusieurs parties corporelles supplémentaires de patients supplémentaires correspondant aux parties corporelles (109) du patient (106).

13. Programme informatique (400) configuré pour amener un dispositif informatique (121) à réaliser le procédé (500) selon l'une quelconque des revendications 1 à 12 lorsque le programme informatique est exécuté sur le dispositif informatique (121).

14. Dispositif informatique (121) comprenant un moyen (400) configuré pour réaliser les étapes du procédé (500) selon l'une quelconque des revendications 1 à 12.

15. Système d'imagerie (100) comprenant le dispositif informatique (121) selon la revendication 14, et une unité d'acquisition (136-148) destinée à l'acquisition des images de luminescence.

FIG.1

Image

Image

Image

109

Image

Image

Image

## FIG.2A

Image

Image

Lowest value

Highest value

Global range

## FIG.2B

FIG.2C

FIG.2D

FIG.3A

FIG.3B

FIG.4

FIG.5A

FIG.5B

600a

600b

FIG.6

700a

700b

FIG.7

700a

700b

800f

FIG.8

900a

900b

800f

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.T. ELLIOTT et al.** *BIOMEDICAL OPTICS EXPRESS 3765*, 01 October 2015, vol. 6 (10)

- **A. V. DSOUZA et al.** Logarithmic intensity compression in fluorescence guided surgery applications. *Journal of Biomedical Optics*, 01 August 2015, vol. 20 (8), 080504